# EUROPÄISCHE PATENTANMELDUNG

(11) **EP 1 223 124 A1**
(43) Veröffentlichungstag der Anmeldung: **17.07.2002**
(21) Anmeldenummer: 01100718.4
(22) Anmeldetag: 12.01.2001
(51) Int. Cl.: B65G 47/96

(54) **Sortierförderer**

(71) Anmelder: Siemens Schweiz AG, 8047 Zürich (CH)
(72) Erfinder: Boller, Manfred, 79801 Hohentengen (DE); Maier, Willy, 5430 Wettingen (CH)
(74) Vertreter: Berg, Peter

(57) **Zusammenfassung**

Der Erfindung bezieht sich auf einen Sortierförderer, der besonders bedarfsgerecht bestückbar ist und auch die Sortierung von vergleichsweise schweren und nicht sonderlich gut rutschfähigen Stückgutteilen ausführt.

Der Sortierförderer ist ausgestattet mit einer Anzahl von Transportwagen (2), welche seitlich kippbare Ablageschalen (6,6') für zu sortierendes Stückgut aufweisen, wobei
a) die Transportwagen (2) eine um eine Kippachse (8) schwenkbare Trageinheit (4,4') für die Ablageschale (6,6') aufweisen;
b) ein in eine Kulisse (28,28') einsteuerbarer und an der Trageinheit (4,4') angreifender Hebelarm (16,16') vorgesehen ist;
c) die Transportwagen (2) ein die Trageinheit (4,4') aufnehmendes Basismodul (14) umfassen;
d) das Basismodul (14) Führungsmittel (12,20,22) für die Kippbewegung der Trageinheit (4,4') und/oder für eine die Kippbewegung auslösende Hubbewegung (18) des Hebelarms (16,16') aufweist; und
e) die Führungsmittel (12,20,22) auswechselbar in dem Basismodul (14) gehalten sind.
Auf diese Weise können die am ehesten einem Verschleiss unterliegenden Führungsmittel mit Erreichen der Verschleissgrenzen ausgetauscht werden. Unterschiedliche Kippwinkel können durch die Auswechselbarkeit der Führungsmittel erzielt werden.

## Beschreibung

Die Erfindung bezieht sich auf einen Sortierförderer mit einer Anzahl von Transportwagen, welche seitlich kippbare Ablageschalen für zu sortierendes Stückgut aufweisen.

Ein derartiger Sortierförderer ist aus der deutschen Patentschrift DE 40 42 708 C2 bekannt. Hierin ist ein Sortierförderer beschrieben, der eine umlaufende Reihe von Trageinheiten für seitlich kippbare Ablageschalen aufweist, die entlang eines Förder-Chassis an einer Lagestation vorbeibewegt und dort mit zu sortierendem Stückgut beladen werden. Die mit Stückgut beladenen Trageinheiten werden anschliessend an einer Reihe von Entlade- oder Empfangsstationen vorbeibewegt, in denen die Ablageschalen mittels an beiden Seiten angeordneten Betätigungsarmen selektiv zum Kippen gebracht werden können, um das zu sortierenden Stückgut zu entladen. Dabei sind die Trageinheiten als Transportwagen oder -einheiten ausgebildet, die Führungsteile aufweisen, welche mit einem grösserem Abstand voneinander in das Förder-Chassis eingreifen. Die Transportwagen sind mit länglichen Antriebsteilen versehen, die sich in Vorschubrichtung der Trageinheiten erstrecken und zum Zusammenwirken mit Linearmotoren ausgelegt sind, welche in feststehenden Positionen längs des Förder-Chassis befestigt sind.

Bei dieser Art von Sortierförderen ist es bekannt, die Ablageschalen mit einer Kippeinrichtung zum Kippen zu bringen, wobei die Kippeinrichtung den Betätigungsarm über eine Nockelstösselrolle in eine Kulisse einsteuert ist, die das Kippen der Schale herbeiführt. Dabei ist es auch schon aus der europäischen Patentschrift EP 0 173 399 B1 bekannt, die Nockenstösselrolle durch eine gesteuerte Bewegung quer zur Förderrichtung in die Kulisse einzusteuern.

Damit ist der Mechanismus geschaffen, die Ablageschalen selektiv zu kippen. Das Kippen der Ablageschale wird je nach Fördergeschwindigkeit sogar noch durch das mit Beginn des Kippvorgangs nach aussen rutschende Sortiergut unterstützt, weil sich der Schwerpunkt der Ablageschale zwangläufig nach aussen zu der Entladestation hin verlagert.

Problematisch mit dem vorstehend genannten Kippförderer ist jedoch grundsätlich die Tatsache, dass die abzukippenden Stückgutteile aufgrund ihrer äusseren Beschaffenheit ganz unterschiedliche Rutscheigenschaften haben können, was im besonderen bei vergleichsweise schweren und nicht besonders gut rutschfahigen Stückgutteilen in einer erheblichen mechanischen Beanspruchung der Führungskulisse oder gar einem zurückbewegen der Ablageschale in ihre Grundposition führen kann. Im Ergebnis ist in einem solchen Fall ein erneuter Sortierversuch oder sogar die händische Sortierung dieses Stückgutteils vorzunehmen, was die Leistung des Sortierförderers beeinträchtigt.

Dieses Problem kann gelöst werden, indem die maximal realisierbaren Kippwinkel erhöht werden. Die vergleichsweise schlecht rutschenden Stückgutteile werden dann ausreichend beschleunigt. Die ohnehin schon gut rutschenden Stückgutteile könnten dann jedoch zu schnell werden und sich möglicherweise überschlagen, wodurch die üblicherweise auf der Oberseite befindliche Adresse nach unten oder zur Seite verkehrt wird.

Dieser Nachteil könnte nun wiederum mit einer entsprechenden Ausgestaltung der Ablageschale behoben werden. Es ergibt sich somit, dass bei der Sortierung von Stückgut eine hohe Flexibilität an die Anpassung des Sortierförderers gegeben sein müsste, um bedarfsgerecht unterschiedliche Ablageschalen und Kippwinkel zu realisieren. Die aus dem Stand der Technik bekannten Sortierförderer leisten hierzu keinen Beitrag.

Der Erfindung liegt daher die Aufgabe zugrunde, einen Sortierförderer anzugeben, der besonders bedarfsgerecht bestückbar ist und auch die Sortierung von vergleichsweise schweren und nicht sonderlich gut rutschfähigen Stückgutteilen sicher und zuverlässig ausführt.

Diese Aufgabe wird bei einem Sortierförderer der eingangs genannten Art erfindungsgemäss dadurch gelöst, dass
a) die Transportwagen eine um eine Kippachse schwenkbare Trageinheit für die Ablageschalen aufweisen;
b) ein in eine Kulisse einsteuerbarer und an der Trageinheit angreifender Hebelarm vorgesehen ist;
c) die Transportwagen ein die Trageinheit aufnehmendes Basismodul umfassen;
d) das Basismodul Führungsmittel für die Kippbewegung der Trageinheit und/oder für eine die Kippbewegung auslösende Hubbewegung des Hebelarms aufweist; und
e) die Führungsmittel auswechselbar in dem Basismodul gehalten sind.

Auf diese Weise wird mit der Schaffung des Basismoduls ein besonders einfacher Aufbau der Transportwagen erzielt. Auf diese Weise können die am ehesten einem Verschleiss unterliegenden Führungsmittel einfach mit Erreichen der Verschleissgrenzen ausgetauscht werden. Unterschiedliche Kippwinkel können einfach durch die Auswechselbarkeit der Führungsmittel erzielt werden.

Die Führungsmittel sind mit besonderem Vorteil im Basismodul in Form von Führungsbahnen für die Kippbewegung der Trageinheit und/oder für die Hubbewegung der Hebelarme ausgestaltbar. Die Trageinheit und die Hebelarme brauchen so in konstruktiv einfach umsetzbarer Weise nur entsprechend den Führungsbahnen ausgestaltete Führungselemente aufzuweisen.

Die Führungsbahnen können dabei als Nutenbahnen ausgeführt sein und ggfs. zusätzlich hinterschnittene Kanten für die sichere Führung der Führungselemente aufweisen. Mögliche Ausführungsvariante sehen hier schwalbenschwanzartig hinterschnittene oder T-förmig hinterschnittene Führungsbahnen vor.

Durch eine entsprechende Dimensionierung der Führungsmittel ist auch ein maximaler Kippwinkel der Trageinheit vorgebbar. Damit ist die maximale Grösse der austauschbaren Führungsmittel durch die längste zu realisierende Hubstrecke (betrachtet man die Hubbewegung) und/oder durch den grössten zu realisierenden Kreisbogen (betrachtet man die Kippbewegung der Trageinheit) gegeben. Das Merkmal der Austauschbarkeit der Führungsmittel ist besonders einfach in die Praxis umsetzbar, indem das Basismodul Ausnehmungen aufweist und die Führungsmittel in Form von Einlegern in die Ausnehmungen einlegbar sind. Dabei kann es u.a. aus Kostenerwägungen sinnvoll sein, wenn die auf den maximal zu realisierenden Kippwinkel ausgelegten Führungsmittel selbst wieder mit Begrenzungselementen bestückbar sind um eine bedarfsweise gewünschte Beschränkung des Kippwinkels herbeizuführen. Auf diese Weise genügt die Konstruktion und Fertigung eines einzigen Einlegers.

Eine hohe Funktionalität und ein gleichzeitig vergleichsweise geringer Fertigungsaufwand ergibt sich, wenn das Basismodul als Kunststoffspritzteil ausgeführt und die Einleger aus einem verschleissfestem Material gefertigt sind. Damit können im besonderen im Bereich der Kunststofftechnik Materialpaarungen geschaffen werden, die besonders verschleissfest sind.

Die Führungsmittel sind besonders einfach austauschbar, wenn die Führungsmittel formschlüssig in das Basismodul einführbar sind und mittels Formschluss gehalten sind. Darüberhinaus ist zusätzlich oder alternativ auch eine Befestigung durch Schrauben oder vergleichsbare Mittel oder durch Rastmittel möglich.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Figur 1: in schematischer Darstellung einen ersten Transportwagen eines Sortierförderers mit einer Ablageschale in Grundposition und gekippter Position; und
- Figur 2: eine Aufsicht auf ein zwei Halbteile umfassendes Basisteil, welches Bestandteil des Transportwagens gemäss Figur 1 ist.

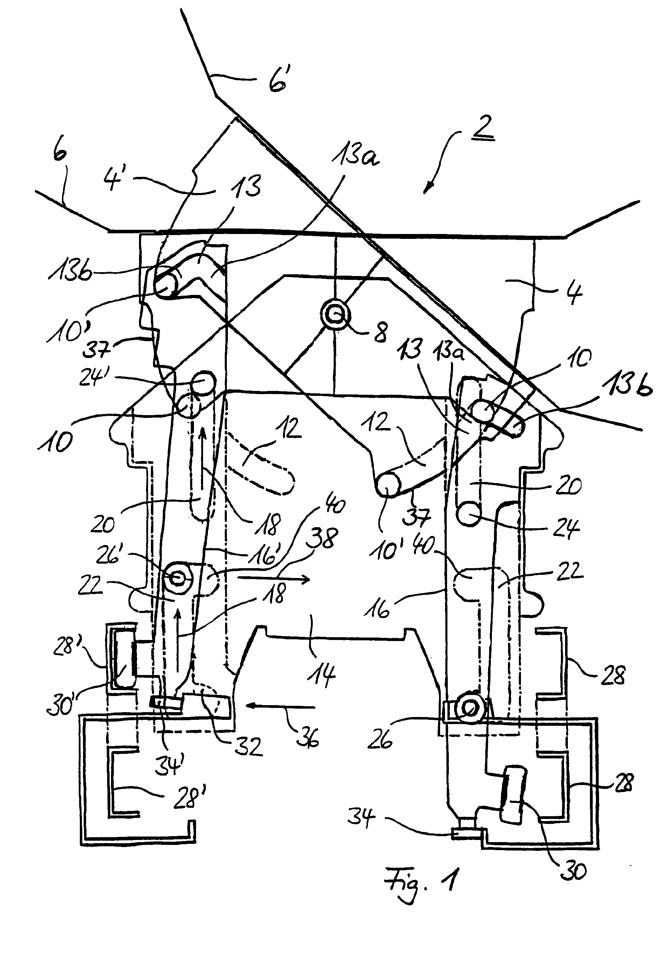

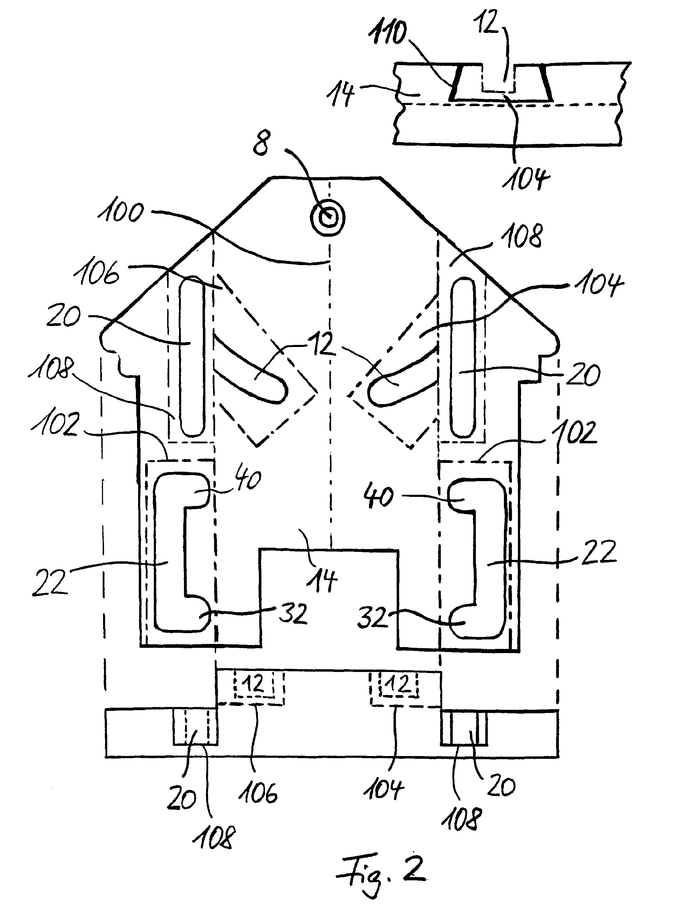

Für in den Figuren 1 und 2 baugleiche Teile werden die gleichen Bezugszeichen verwendet. Baugleiche Teile werden in gekippter Position gegenüber den Bauteilen in Grundposition mit einem Hochkomma gekennzeichnet.

Figur 1 zeigt in schematischer Darstellung einen ersten Transportwagen 2, der Bestandteil einer umlaufenden Kette von Transportwagen eines hier nicht weiter dargestellten Sortierförderers ist. Eine Förderrichtung des Sortierförderers verläuft senkrecht zur Darstellungsebene. Der Transportwagen 2 verfügt über eine auf einer Trageinheit 4, 4' montierte Ablageschale 6, 6' zur Aufnahme von hier nicht weiter dargestellten Stückgutteilen. Die Trageinheit 4, 4' ist um eine parallel zur Förderrichtung verlaufenden Achse 8 verschwenkbar gehalten und in der Figur 1 in nach rechts gekippter Position gezeichnet.

Dabei ist die Trageinheit 4 mit nockenförmigen Zapfen 10, 10' erst mit dem Auslenken in einer kreisbogenartigen Führungsbahn 12 geführt, welche in einem Basismodul 14 eingeformt ist. Das Basismodul 14 dient damit auch zum Tragen der Trageinheit 4 und stellt eine Verbindung zu hier nicht weiter dargestellten Antriebelementen des Sortierförderers, z.B. Linearmotoren, und den benachbarten Transportwagen dar.

Weiter werden in dem Basismodul 14 auch Hebelarme 16, 16' geführt, wobei im vorliegenden Ausführungsbeispiel der Hebelarm 16' auf der linken Seite durch eine Hubbewegung 18 das Kippen der Ablageschale 6 herbeigeführt hat. Zur Führung der Hebelarme 16, 16' sind im Basismodul 14 ebenfalls Führungsbahnen 20, 22 mit zugehörigen Zapfen 24, 24' bzw. 26, 26', die an den Hebelarmen 16, 16' angeordnet sind, vorgesehen.

Um nun das einseitige Kippen einer Ablageschale 6, 6' herbeizuführen zu können, ist es vorgesehen, den auf der jeweils anderen Seite angeordneten Hebelarm, hier den Hebelarm 6', in eine Kulisse 28, 28' einzusteuern, die im vorliegenden Ausführungsbeispiel eine nur zweidimensional gekrümmte Kurve im Raum vorgibt, der der Hebelarm 16' zu folgen hat. Zur Führung des Hebelarms 16' in der Kulisse 28, 28' verfügen die Hebelarme 16, 16' über eine reibgelagerte Nockenstösselrolle 30, 30', die mittels eines hier nicht weiter dargestellten Einsteuerelements in die Kulisse 28, 28' eingesteuert wird.

Damit der Hebelarm 16' jedoch die Hubbewegung 18 vollführen kann, muss der Hebelarm 16' zunächst aus seiner Verriegelung gelöst werden. Die Verriegelung besteht darin, dass der rollgelagerte Zapfen 26' in einer seitlich der Führungsbahn 22 gelegenen ersten Ausbuchtung 32, die Bestandteil der Führungsbahn 22 ist, in der Parkposition gelagert ist und mittels einer Ablenkrolle 34 in eine erste Schwenkrichtung 36 geschwenkt wird. Die Ablenkrolle 34 wäre auch verzichtbar, weil die Funktion der Ablenkrolle 34 bei entsprechend gestaltetem Einsteuerelement auch durch ein Angriff an der Nöckenstösselrolle 30' direkt erzielt werden kann. Die erste Schwenkrichtung 36 ist dabei im wesentlich senkrecht zur Hubbewegung 18 orientiert. Die erste Schwenkbewegung vollzieht sich dabei um die Achse des Zapfens 24'. Anschliessend folgt die Hubbewegung 18 mit dem Kippen der Trageinheit 4' und der Ablageschale 6'. In diesem Status befindet sich die gezeigte Kippbewegung. Zur Verriegelung der gekippten Position folgt abschliessend eine Bewegung in eine zweite Schwenkrichtung 38 antiparallel zur ersten Schwenkrichtung 36. Der rollgelagerte Zapfen 26' ruht dann in einer zweiten Ausbuchtung 40 seitlich am Ende des senkrecht aufsteigenden Abschnitts der Führungsbahn 22 und kann nicht mehr direkt nach unten oder oben gedrückt werden. Damit ist sichergestellt, dass die Ablageschale 6' dauerhaft in der gekippten Position verharrt bis der Transportwagen 2 eine hier nicht weiter dargestellte Rückstellkulisse passiert und eine umgekehrte Bewegungsabfolge des Hebelarms 16' erzielt ist.

Die Übertragung der Hubbeweung 18 vom Hebelarm 16' auf die Trageinheit 4' wird durch einen Gleitsitz des Hebelarms 16' an dem als Gegenlager wirkenden Zapfen 10, 10' der Trageinheit 4' herbeigeführt. Auf diese Weise wird daher der andere Hebelarm 16 nicht mitbewegt, wodurch der nach unten benötigte Platzaufwand ganz erheblich gegenüber einem mit nach unten schwenkenden Hebelarm verringert ist. Weiter wird mit dem Beginn der Hubbewegung 18 zugleich die Trageinheit 4' so verschwenkt, dass eine Hubbewegung des Hebelarm 16 blockiert ist. Durch die Länge der Führungsbahnen 20, 22 und den Kreisbogenausschnitt der Führungsbahn 12 lässt sich zudem der gewünschte Kippwinkel in weiten Grenzen einstellen. Dabei können die Trageinheit 4, 4' und die Hebelarme 16, 16' unverändert bleiben.

Um die konstruktive Ausgestaltung des Gleitsitzes näher zu erläutern, muss zunächst die konstruktive Ausgestaltung einer Führungsbahn 13, 13' beschrieben werden. Die Führungsbahn 13, 13' ist jeweils im oberen Bereich der Hebelarme 16, 16' eingeformt. Bei dem in Grundposition befindlichen Hebelarm 16 stellt ein erster Abschnitt 13a der Führungsbahn 13 eine Verlängerung der Führungsbahn 12 mit gleichem Radius dar. Ein zweiter Abschnitt 13b verläuft zum ersten Abschnitt 13a etwa rechtwinklig. Der exakte Verlauf bestimmt sich nach einem Drehpunkt, der durch die Lage des zapfens 24 gegeben ist und zu diesem Drehpunkt einen Kreisbogenausschnitt darstellt.

Im Hinblick auf eine Kippbewegung der Trageinheit 4 muss nun die Position des Zapfens 10 gerade so sein, dass der Zapfen 10 in den ersten Abschnitt 13a der Führungsbahn 13 und von dort in die Führungsbahn 12 gleiten kann. Auf diese Weise wird der passive Hebelarm 16 nicht aus seiner Grundposition herausbewegt. Anders stellt sich die Situation für den Zapfen 10' dar, der mit Ausführung der Schwenkbewegung des Hebelarms 16' in die erste Schwenkrichtung 36 in den zweiten Abschnitt 13b der Führungsbahn 13 hereingleitet und von Beginn der Hubbewegung 18 an in diesem Abschnitt 13b geführt ist.

Auf diese Weise wird auch deutlich, dass es bereits mit Beginn der Hubbewegung unmöglich ist, den passiven Hebelarm 16 zu bewegen, weil der Zapfen 10 der Trageinheit 4 bereits in den ersten Abschnitt 13a der Führungsbahn 13 eingesteuert ist und damit eine Entriegelungsbewegung des Hebelarms 16 verhindert ist. Mit anderen Worten gesagt verhindert eine Konturlinie 37 der Trageinheit 4 bei der weiteren Schwenkbewegung die Entriegelung des passiven Hebelarms 16.

Figur 2 zeigt nun deutlich das eigentliche Wesen der vorliegenden Erfindung. In der Aufsicht auf das Basismodul 14, d.h. genauer gesagt auf ein Halbteil des Basismoduls 14, ist erkennbar, dass die einzelnen Führungsbahnen 12, 20 und 22 in Form von Einlegern 104, 106, 108 und 102 realisiert sind. Dabei ist die Ausgestaltung der Einleger 102 und 108 so gewählt, dass mit einem Bauteil beide Seiten des Basismoduls 14 bestückbar sind. Aufgrund der vorhandenen Asymetrie der Form des Einlegers 108 ist die Führungsbahn 20 bis auf den Boden des Einlegers 108 geführt, so dass der Einleger 108 durch einfaches Wenden für beide Ausschnitte in dem Basismodul 14 verwendbar ist. Gleiches gilt für den Einleger 102, dessen Führungsbahn 22 nicht bis auf den Boden des Einlegers 102 ausgeformt sein muss, weil dieser Einleger 102 durch eine Drehung um 180° in der Zeichnungsebene vom linken in den rechten Ausschnitt einlegbar ist.

Die Einleger 102 und 108 müssen nun noch in geeigneter Weise in den entsprechenden Ausschnitten befestigt werden. Dies kann einerseits durch Verschrauben oder ähnliches geschehen. Andererseits können die Einleger 102 und 108 auch selbsttätig gehalten sein, weil sie sich gegenseitig, ggfs. über zusätzliche Abstandshalter, abstützen. Dabei können auch die beiden Basismodulteile 14a, 14b so ausgestaltet sein, dass die Einleger 102, 108 mit dem Zusammenfügen der beiden Basismodulteile 14a, 14b festgesetzt sind.

Eine Alternative hierzu ist in der oberhalb des Basismoduls 14 angeordneten Detaildarstellung zu erkennen. Dort ist der Einleger 104 (gleiches gilt für den Einleger 106) in einer Aufnahme 110 gehalten, die schwalbenschwanzartig hinterschnitten ist. So wird der Einleger 104 in die Aufnahme 110 eingeschoben und ist dann gegen eine Löslösung in eine Richtung senkrecht zur Einschubrichtung gesichert. Durch ein anschliessendes Einsetzen eines entsprechend ausgestalteten Einlegers 108 kann der Einleger 104 auch gegen die Entfernung entgegengesetzt zur Einschubrichtung gesichert werden. Auf diese Weise sind keine besonderen Massnahmen zur Befestigung des Einleger 104, 106 erforderlich.

Weil die Führungsbahnen 12, 20, 22 in Form von in die Einleger 102 bis 108 eingeformter Nutenbahnen realisiert sind, ist es möglich, dass mit ein und demselben Basismodul 14 aufgrund der auswechselbaren Einleger mit entsprechend ausgeformten Führungsbahnen Sortierförderer mit unterschiedlichen, dem aktuellen Bedarf anpassbaren Kippwinkeln realisiert werden können.

Ein weiteres hier nicht weiter dargestelltes Ausführungsbeispiel sieht eine Veränderung (Einstellung) des Kippwinkels von aussen vor. Hierzu werden die Einleger 104 und 106 zu einem Einleger zusammengefasst, der um die Achse 8 drehbar gelagert ist. Mit einem von aussen an diesem Einleger angreifenden Verstellarm lässt sich dann der Einleger mehr zur einen oder mehr zur anderen Seite verschwenken, wodurch entsprechende Kippwinkelveränderungen erzielbar sind. Weiter wäre es auch denkbar, zwei Einleger zu realisieren, die um die Achse 8 verschwenkbar sind und quasi achsensymmetrisch weiter nach aussen oder innen mit Verstellmöglichkeit von aussen verschwenkbar sind, wodurch sich für beide Kippseiten gleichzeitig eine gleichartige Veränderung des maximal möglichen Kippwinkels ergibt.

Bezugszeichenliste
- 2: erster Transportwagen
- 4, 4': Trageinheit
- 6, 6': Ablageschale
- 8: Achse
- 10, 10': Zapfen
- 12: Führungsbahn
- 13: Führungsbahn
- 13a, 13b: erster bzw. zweiter Abschnitt
- 14: Basismodul
- 14a, 14b: Basismodulteile
- 16, 16': Hebelarme
- 18: Hubbewegung
- 20, 22: Führungsbahnen
- 24, 24': Zapfen
- 26, 26': rollengelagerte Zapfen
- 28, 28': Kulisse
- 30, 30': Nockenstösselrolle
- 32: erste Ausbuchtung
- 34: Ablenkrolle
- 36: erste Schwenkrichtung
- 37: Konturlinie
- 38: zweite Schwenkrichtung
- 40: zweite Ausbuchtung
- 100: Symmetrieachse
- 102 bis 108: Einleger
- 110: schwalbenschwanzartig hinterschnittener Ausschnitt

## Patentansprüche

1. Sortierförderer mit einer Anzahl von Transportwagen (2), welche seitlich kippbare Ablageschalen (6, 6') für zu sortierendes Stückgut aufweisen, wobei
a) die Transportwagen (2) eine um eine Kippachse (8) schwenkbare Trageinheit (4, 4') für die Ablageschale (6, 6') aufweisen;
b) ein in eine Kulisse (28, 28') einsteuerbarer und an der Trageinheit (4, 4') angreifender Hebelarm (16, 16') vorgesehen ist;
c) die Transportwagen (2) ein die Trageinheit (4, 4') aufnehmendes Basismodul (14) umfassen;
d) das Basismodul (14) Führungsmittel (12, 20, 22) für die Kippbewegung der Trageinheit (4, 4') und/oder für eine die Kippbewegung auslösende Hubbewegung (18) des Hebelarms (16, 16') aufweist; und
e) die Führungsmittel (12, 20, 22) auswechselbar in dem Basismodul (14) gehalten sind.

2. Sortierförderer nach Anspruch 1,
**dadurch gekennzeichnet, dass**
im Basismodul (14) als Führungsmittel Führungsbahnen (12, 20, 22) für die Kippbewegung der Trageinheit (4, 4') und/oder für die Hubbewegung (16) der Hebelarme (16, 16') vorgesehen sind.

3. Sortierförderer nach Anspruch 2,
**dadurch gekennzeichnet, dass**
ein maximaler Kippwinkel der Trageinheit (4, 4') durch eine entsprechende Ausgestaltung der Führungmittel (12, 20, 22) vorgebbar ist.

4. Sortierförderer nach einem der Ansprüche 1 bis 3,
**dadurch gekennzeichnet, dass**
das Basismodul (14) Ausnehmungen (110) aufweist und die Führungsmittel in Form von Einlegern (102 bis 108) in die Ausnehmungen (110) einlegbar sind.

5. Sortierförderer nach Anspruch 4,
**dadurch gekennzeichnet, dass**
die Einleger (102 bis 108) hinsichtlich der Führungsmittel (12, 20 ,22) auf den maximal zu realisierenden Kippwinkel ausgelegt sind und selbst mittels Begrenzungselementen auf den bedarfsweise gewünschten Kippwinkel begrenzbar sind.

6. Sortierförderer nach Anspruch 4 oder 5,
**dadurch gekennzeichnet, dass**
die Führungsmittel in den Einlegern in Form von Nutenbahnen, anwendungsbedingt ggfs. in Form von hinterschnittenen Nutenbahnen, realisiert sind.

7. Sortierförderer nach Anspruch 6,
**dadurch gekennzeichnet, dass**
die Begrenzungselemente in Form von in die Nutenbahnen einlegbaren Füllkörpern realisiert sind.

8. Sortierförderer nach einem der Ansprüche 4 bis 7,
**dadurch gekennzeichnet, dass**
das Basismodul als Kunststoffspritzteil ausgeführt und die Einleger aus verschleissfestem Material gefertigt sind.

9. Sortierförderer nach einem der Ansprüche 1 bis 8,
**dadurch gekennzeichnet, dass**
die Führungsmittel (12, 20, 22) formschlüssig in das Basismodul (14) einführbar sind und mittels Formschluss gehalten sind.
